# DEMANDE DE BREVET EUROPEEN

(11) **EP 0 673 862 A1**
(43) Date de publication de la demande: **27.09.1995**
(21) Numéro de dépôt: 95490011.4
(22) Date de dépôt: 15.03.1995
(51) Int. Cl.: B65G 17/20, B65G 9/00

(54) **Convoyeur à cable**

(30) Priorité: 25.03.1994 FR 9403929
(71) Demandeur: COMPAGNIE FINANCIERE COFINOR, S.A., F-14100 Lisieux (FR)
(72) Inventeur: Guinamard, Jean, F-59650 Villeneuve d'Ascq (FR); Henneman, Alain, F-59290 Wasquehal (FR); Gombert, David, Appartement 1, F-62400 Bethune (FR)
(74) Mandataire: Ecrepont, Robert

(57) **Abrégé**

L'invention se rapporte à un convoyeur à câble comprenant:
- une structure (2) portant un rail comprenant au moins une surface (4) de roulement,
- au moins un porte-charge (5) suspendu à la structure par des organes de roulement,
- un élément (7) de traction.

Elle est caractérisée en ce que chaque porte-charge comprend, pour être situé sous le rail, un patin (12) qui, solidaire du corps du porte-charge, présente une face (12a) dite de glissement, tournée vers le rail, lequel patin s'étend sur une longueur suffisante pour empêcher le basculement et glisse sur la surface (13) de guidage.

## Description

L'invention se rapporte à un convoyeur à câble.

Il trouve notamment application dans le domaine du transfert d'articles sur de courtes distances, tel le transfert de vêtements.

Classiquement, un convoyeur à câble comprend :
- une structure portant un rail comprenant au moins une surface de roulement définissant un parcours prédéterminé, généralement, en circuit fermé,
- au moins un porte-charge suspendu à la structure, qui, par des organes de roulement, prend appui sur la surface de roulement précitée,
- un élément de traction, tel un câble, qui, au moins indirectement associé à chaque porte-charge, se déplace au plus prés sous le rail le long du parcours prédéterminé précité guidé en cela par tout moyen connu et,
- un moyen moteur entrainant l'élément de traction.

Généralement, le parcours comprend un tronçon aller et un tronçon retour qui se situent, par exemple, dans deux plans verticaux, éventuellement, parallèles entre eux.

Pour le passage d'un tronçon à l'autre, le parcours comprend au moins un tronçon courbe dans chacun desquels l'élément de traction est généralement dévié par des moyens de guidage, tels deux poulies de renvoi d'axe vertical dont l'une d'elle assure l'entrainement généralement par friction de l'élément de traction tandis que l'autre poulie est montée libre en rotation sur un axe notamment vertical.

Le parcours de ces convoyeurs peut se situer entièrement dans un même plan notamment horizontal mais plus généralement le parcours se situe dans plusieurs plans horizontaux avec bien entendu, entre deux plans successifs, des zones de transition.

La raison de ces changements de plan résulte, par exemple, du fait que le circuit dessert plusieurs niveaux et/ou que, pour charger et/ou décharger le convoyeur, on amène les porte-charges à une hauteur accessible pour les préposés au chargement et/ou déchargement et, hors de ces zones, on transporte les articles à une hauteur où, par exemple, ils ne risquent pas de gêner la circulation.

Dans ces zones de transition, la surface de roulement sur laquelle circule les porte-charges est inclinée sur l'horizontal se raccordant donc avec les surfaces de roulement des zones situées dans les deux plans horizontaux successifs par des courbes, l'une dite rentrante du côté du plan horizontal inférieur et l'autre dite sortante.

Du fait que, pour pouvoir être entrainé par friction par la roue motrice, cet élément de traction doit être relativement tendu.

Au passage des courbes dites sortantes des zones de transition, l'élément de traction tend à suivre une trajectoire rectiligne et à suivre une corde de cette courbe, ce qui soulève les porte-charges et notamment ceux qui sont moins chargés.

Les organes de roulement ne prennent alors plus appui sur la surface de roulement.

De manière classique, l'élément de traction est immobilisé en translation sur chaque porte-charge, ceci par un point d'ancrage situé sous les organes de roulement et au dessus du moyen d'accrochage de la charge.

Bien que situé prés du rail, ce point d'ancrage en est à une certaine distance.

La position du point d'ancrage de l'élément de traction et le soulèvement des organes de roulement des porte-charges dans ces zones de transition précitées a pour effet d'écarter les porte-charges d'une orientation orthogonale aux surfaces de roulement et risque donc de provoquer un basculement des porte-charges et un dégagement d'une charge.

Pour remédier a ces inconvénients, dans les convoyeurs connus à ce jour :
- d'une part, au dessus de la surface de roulement, est prévue une surface de guidage qui, tournée vers la surface de roulement, est écartée de celle-ci d'une valeur légérement supérieure au diamètre des organes de roulement et,
- d'autre part, les organes de roulement appuient sur la surface de roulement en deux points écartés selon une direction parallèle au sens de déplacement du porte-charge de manière à lui donner une assise.

Cette solution permet certes de remédier aux problèmes évoqués plus haut mais présente au moins deux inconvénients.

En premier lieu, la présence de cette surface de guidage par dessus les organes de roulement rend beaucoup plus difficile l'accés aux organes de roulement et l'entretien s'en trouve pénalisé et complique le rail dont il majore le prix de revient.

Le deuxième inconvénient est d'ordre financier.

En effet, les organes de roulement sont coûteux et leurs coûts grèvent fortement le prix de revient de chaque porte-charge.

Est connu un porte-charge (GB-A-347.409) comprenant, sous l'organe de roulement, un second organe de roulement qui, prenant appui sous une surface de guidage que porte au moins indirectement le dessous de la structure porteuse, évite le basculement.

Comme évoqué plus haut, cela présente un surcoût financier.

Un des résultats que l'invention vise à obtenir est un convoyeur à câble du type précité qui remèdie aux inconvénients évoqués plus haut.

A cet effet, l'invention a pour objet un tel convoyeur à câble notamment caractérisé en ce que chaque porte-charge comprend, pour être situé sous le rail, un patin qui, solidaire du corps du porte-charge, présente une face dite de glissement, tournée vers le rail, lequel patin s'étend sur une longueur suffisante pour empêcher le basculement et glisse sur la surface de guidage.

L'invention sera bien comprise à l'aide de la description ci-après faite à titre d'exemple non limitatif en regard du dessin ci-annexé qui représente schématiquement:

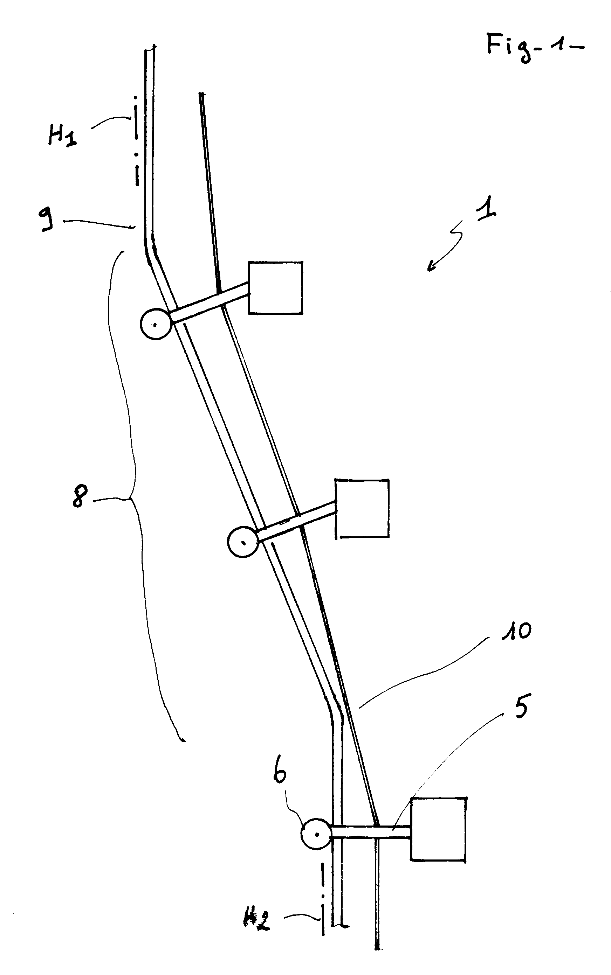

- figure 1 : une vue partielle d'un convoyeur à câble,

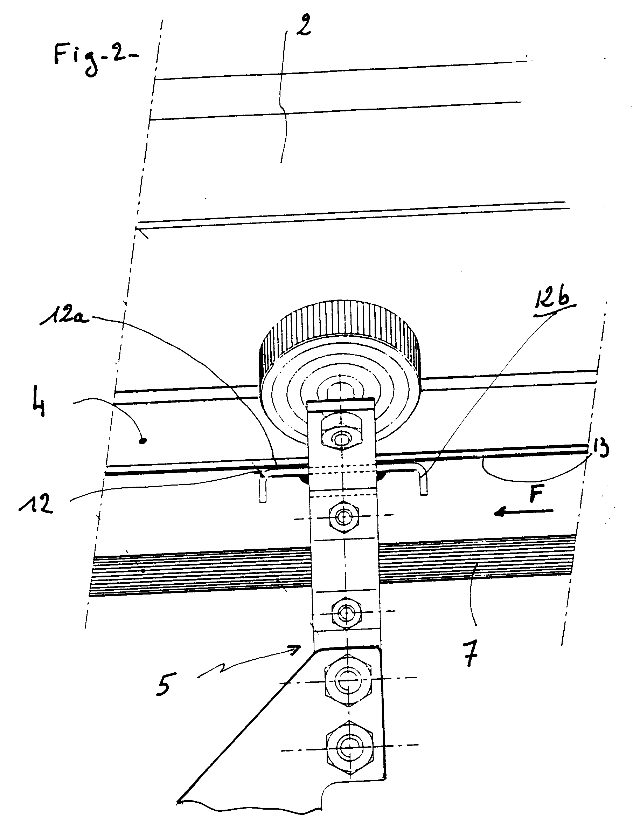

- figure 2 : un détail de la figure 1,

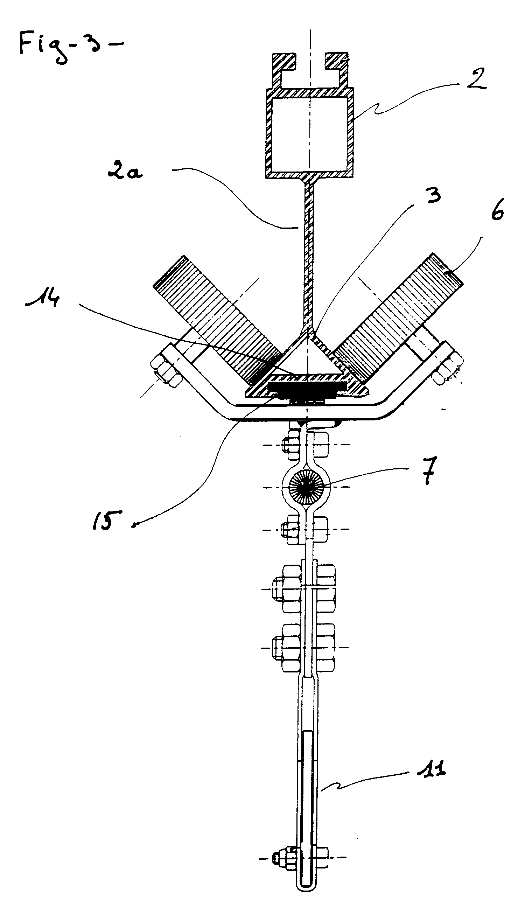

- figure 3 : une vue selon F de la figure 2.

En se reportant au dessin, on voit que le convoyeur 1 à câble comprend :
- une structure 2 portant un rail 3 comprenant au moins une surface 4 de roulement définissant un parcours prédéterminé, généralement, en circuit fermé,
- au moins un porte-charge 5 suspendu à la structure, qui, par des organes 6 de roulement, prend appui sur la surface 4 de roulement précitée,
- un élément 7 de traction, tel un câble, qui, au moins indirectement associé à chaque porte-charge, se déplace au plus prés sous le rail le long du parcours prédéterminé précité guidé en cela par tout moyen connu et,
- un moyen moteur (non représenté) entrainant l'élément de traction.

Généralement, le parcours comprend un tronçon aller et un tronçon retour qui se situent, par exemple, dans deux plans verticaux, éventuellement, parallèles entre eux.

Pour le passage d'un tronçon à l'autre, le parcours comprend au moins un tronçon courbe dans chacun desquels l'élément de traction est généralement dévié par des moyens de guidage, tels deux poulies de renvoi d'axe vertical dont l'une d'elle assure l'entrainement de l'élément de traction généralement par friction tandis que l'autre poulie est montée libre en rotation sur un axe notamment vertical.

Le parcours de ces convoyeurs peut se situer entièrement dans un même plan notamment horizontal mais plus généralement le parcours se situe dans plusieurs plans H1, H2 horizontaux avec bien entendu, entre deux plans successifs, des zones 8 de transition.

La raison de ces changements de plan résulte, par exemple, du fait que le circuit dessert plusieurs niveaux et/ou que, pour charger et/ou décharger le convoyeur, on amène les porte-charges à une hauteur accessible pour les préposés au chargement et/ou déchargement et, hors de ces zones, on transporte les articles à une hauteur où, par exemple, ils ne risquent pas de gêner la circulation.

Dans ces zones 8 de transition, la surface de roulement sur laquelle circule les porte-charges est inclinée sur l'horizontal se raccordant donc avec les surfaces de roulement des zones situées dans les deux plans horizontaux successifs par des courbes, l'une 9 rentrante du côté du plan horizontal inférieur et l'autre sortante.

De manière classique, l'élément 7 de traction est immobilisé en translation sur chaque porte-charge, ceci par un point d'ancrage situé sous les organes de roulement et au dessus d'un moyen 11 d'accrochage de la charge.

Par exemple, chaque porte-charge est constitué d'un corps notamment en forme de Y avec sa partie supérieure qui porte les organes de roulement et sa base qui présente un moyen d'accrochage d'une charge.

La structure porteuse 2 se présente, quant à elle, comme un profilé comprenant une âme 2a présentant de chaque côté une surface de roulement, sur lesquelles circulent les organes de roulement.

Ces surfaces de roulement peuvent être dans un même plan mais plus généralement elles définissent entre elles un Vé inversé.

Le porte-charge présente en outre un moyen pour empêcher son basculement accidentel en dehors de sa position sensiblement perpendiculaire au rail sous l'effet de la traction de l'élément de traction, ce moyen coopérant, avec un jeu prédéterminé, avec une surface de guidage que porte au moins indirectement le dessous de la structure porteuse.

Selon l'invention, chaque porte-charge comprend, pour être situé sous le rail, un patin 12 qui, solidaire du corps du porte-charge, présente une face 12a dite de glissement, tournée vers le rail, lequel patin s'étend sur une longueur suffisante pour empêcher le basculement et glisse sur la surface 13 de guidage.

Selon l'invention, au moins l'un des éléments que sont le patin 12 et la surface de guidage 13 porte un moyen diminuant le coefficient de frottement de ce patin sur la dite surface 13 de guidage.

Selon l'invention, la surface 13 de guidage ne présente le moyen diminuant le coefficient de frottement avec le patin que sur certains tronçons et, plus particulièrement, dans les courbes sortantes des zones de transition.

Le moyen pour diminuer le coefficient de frottement est un matériau approprié, tel un plastique, que l'homme du métier saura déterminer en fonction des matériaux constituant le patin et la structure 2 porteuse.

Il pourra s'agir d'une simple garniture.

Selon l'invention, le rail 3 comprend une gorge 14 qui, tournée vers les patins, loge une bande 15 de matière ayant des propriétés réduisant la friction.

Un autre moyen pour réduire le frottement sera, par exemple, un train de galets.

De préférence, le patin 12 aura ses extrémité 12b recourbées à l'opposé de la surface de guidage.

La présence de ce patin :
- d'une part, permet d'éviter que les organes de roulement s'éloignent des surfaces de roulement et,
- d'autre part, permet au porte-charge de ne porter d'organes de roulement que dans le plan transversal au rail, médian au porte-charge et donc de réduire le nombre d'organes de roulement du fait qu'il évite le phénomène de basculement.

Il n'est donc plus nécessaire de prévoir des surfaces supplémentaires de guidage au dessus des organes de roulement, ce qui permet de rendre plus accessible les porte-charges.

On réalise donc facilement un moyen anti-basculement peu coûteux qui peut, par exemple, être rajouté à des porte-charges existants.

## Revendications

1. Convoyeur à câble comprenant :
- une structure (2) portant un rail (3) comprenant au moins une surface (4) de roulement définissant un parcours prédéterminé,
- au moins un porte-charge (5) suspendu à la structure, qui, par des organes (6) de roulement, prend appui sur la surface (4) de roulement précitée,
- un élément (7) de traction qui, au moins indirectement associé à chaque porte-charge, se déplace au plus prés sous le rail le long du parcours prédéterminé précité guidé en cela par tout moyen connu et,
- un moyen moteur entrainant l'élément de traction,
chaque porte-charge comprend un moyen pour empêcher au porte-charge son basculement accidentel en dehors de sa position sensiblement perpendiculaire au rail sous l'effet de la traction de l'élément de traction,
lequel moyen précité coopère, avec un jeu prédéterminé, avec une surface (13) de guidage que porte au moins indirectement le dessous de la structure (2) porteuse,
ce convoyeur étant **CARACTERISE** en ce que chaque porte-charge comprend, pour être situé sous le rail, un patin (12) qui, solidaire du corps du porte-charge, présente une face (12a) dite de glissement, tournée vers le rail, lequel patin s'étend sur une longueur suffisante pour empêcher le basculement et glisse sur la surface (13) de guidage.

2. Convoyeur selon la revendication 1 **caractérisé** en ce qu'au moins l'un des éléments que sont le patin (12) et la surface de guidage (13) porte un moyen diminuant le coefficient de frottement de ce patin sur la dite surface de guidage.

3. Convoyeur selon la revendication 2 **caractérisé** en ce que la surface (13) de guidage ne présente le moyen diminuant le coefficient de frottement avec le patin que sur certains tronçons.

4. Convoyeur selon la revendication 2 ou 3 **caractérisé** en ce que le moyen pour diminuer le coefficient de frottement est un matériau approprié.

5. Convoyeur selon l'une quelconque des revendications 1 à 4 **caractérisé** en ce que le rail (3) comprend une gorge (14) qui, tournée vers les patins, loge une bande (15) de matière ayant des propriétés réduisant la friction.

6. Convoyeur selon la revendication 2 ou 3 **caractérisé** en ce que le moyen pour réduire le frottement est un train de galets.

7. Convoyeur selon la revendication 1 **caractérisé** en ce que le patin (12) a ses extrémité libres (12b) recourbées à l'opposé de la surface de guidage.
